# EUROPEAN PATENT SPECIFICATION

(11) **EP 3 531 786 B1**
(45) Date of publication and mention of the grant of the patent: **30.08.2023**
(21) Application number: 17865211.1
(22) Date of filing: 25.10.2017
(51) Int. Cl.: H04W 74/08

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(30) Priority: 27.10.2016 CN 201610951072
(43) Date of publication of application: 28.08.2019
(73) Proprietor: Huawei Technologies Co., Ltd., Longgang District Shenzhen, Guangdong 518129 (CN)
(72) Inventor: YANG, Mao, Shenzhen Guangdong 518129 (CN); LI, Bo, Xi' an Shaanxi 710072 (CN); LI, Yunbo, Shenzhen Guangdong 518129 (CN)
(74) Representative: Maiwald GmbH
(86) International application number: PCT/CN2017/107669
(87) International publication number: WO 2018/077191

(56) References cited:
- WO-A1-2015/139236
- CN-A- 102 076 106
- CN-A- 104 081 858
- CN-A- 105 682 235
- US-A1- 2005 281 226
- US-A1- 2013 195 036

## Description

### TECHNICAL FIELD

This application relates to wireless communications technologies, and in particular, to a data transmission method and apparatus.

### BACKGROUND

The Internet of Things (Internet of Things, IoT for short) is an inevitable trend of wireless network development. As a most main bearing mode of wireless data, a wireless local area network (Wireless Local Area Network, WLAN for short) needs to support the IoT.

At present, a conventional WLAN features a large bandwidth, a high speed, and relatively short-range transmission. However, an IoT device features a low speed, long distance coverage, low power consumption, and the like due to application particularity. Therefore, the IoT device probably uses a communication bandwidth less than that used by the conventional WLAN. Consequently, IoT transmission on a narrowband channel may occupy an entire WLAN transmission channel, and therefore a method of coordination between a plurality of narrowband channels is required.

WO 2015/139236 A1 describes a multi-channel access method and apparatus, which resolve a problem that a station cannot use an idle non-reserved channel in a data transmission process. A first device performs data transmission with a second device on a first reserved channel, and at the same time, identifies whether a non-reserved channel is in an idle state. When the non-reserved channel is in an idle state, the first device triggers a backoff procedure and sends a channel reservation frame on the non-reserved channel. Then, the first device uses the non-reserved channel as a second reserved channel and performs data transmission with the second device on the first reserved channel and second reserved channel. Therefore, after reserving some channels, a station constantly reserves new idle channels in a data transmission process, and performs data transmission by using the reserved channels and the newly reserved idle channels, thereby improving channel utilization efficiency and saving channel resources.

### SUMMARY

The invention is defined by the appended claims. Embodiments and examples not covered by the claims are meant to illustrate, and facilitate the understanding of, the claimed invention.

Embodiments of this application provide a data transmission method and apparatus to provide a method of coordination between a plurality of narrowband channels.

According to the present application, coordination the plurality of narrowband channels can be used for data transmission, and a signal on a transmit narrowband channel does not cause interference to a signal on a receive narrowband channel even though an access point performs sending on some narrowband channels and performs receiving on some narrowband channels.

### BRIEF DESCRIPTION OF DRAWINGS

FIG. 1 is a schematic architectural diagram of a system of a data transmission method according to an embodiment of this application;
FIG. 2 is a schematic flowchart of a data transmission method according to an embodiment of this application;
FIG. 3 is a schematic flowchart of another data transmission method according to an embodiment of this application;
FIG. 4 is a schematic diagram of a transmission time in a data transmission method according to an embodiment of this application;
FIG. 5 is a schematic diagram of another transmission time in a data transmission method according to an embodiment of this application;
FIG. 6 is a schematic flowchart of another data transmission method according to an embodiment of this application;
FIG. 7 is a schematic flowchart of another data transmission method according to an embodiment of this application;
FIG. 8 is a schematic flowchart of another data transmission method according to an embodiment of this application;
FIG. 9 is a schematic diagram of another transmission time in a data transmission method according to an embodiment of this application;
FIG. 10 is a schematic diagram of another transmission time in a data transmission method according to an embodiment of this application;
FIG. 11 is a schematic diagram of another transmission time in a data transmission method according to an embodiment of this application;
FIG. 12 is a schematic flowchart of another data transmission method according to an embodiment of this application;
FIG. 13 is a schematic diagram of another transmission time in a data transmission method according to an embodiment of this application;
FIG. 14 is a schematic diagram of another transmission time in a data transmission method according to an embodiment of this application;
FIG. 15 is a schematic flowchart of another data transmission method according to an embodiment of this application;
FIG. 16 is a schematic diagram of another transmission time in a data transmission method according to an embodiment of this application;
FIG. 17 is a schematic flowchart of another data transmission method according to an embodiment of this application;
FIG. 18 is a schematic structural diagram of a data transmission apparatus according to an embodiment of this application;
FIG. 19 is a schematic structural diagram of another data transmission apparatus according to an embodiment of this application;
FIG. 20 is a schematic structural diagram of another data transmission apparatus according to an embodiment of this application; and
FIG. 21 is a schematic structural diagram of another data transmission apparatus according to an embodiment of this application.

### DESCRIPTION OF EMBODIMENTS

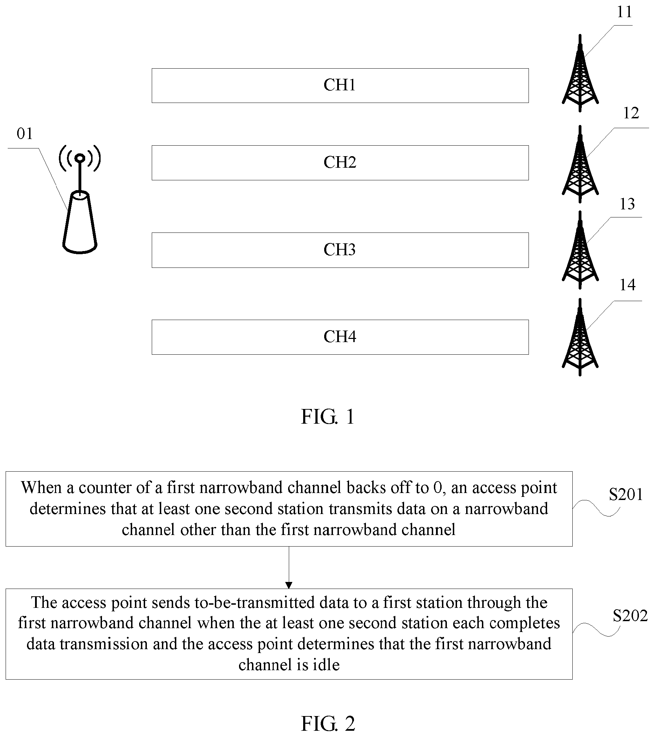

FIG. 1 is a schematic architectural diagram of a system of a data transmission method according to an embodiment of this application. The method may be applied to a wireless communications system shown in FIG. 1. As shown in FIG. 1, the wireless communications system may include an access point 01 and a plurality of stations. That there are four stations (which are marked as a station 11, a station 12, a station 13, and a station 14) in FIG. 1 is used as an example.

The wireless communications system may be a network compatible with the Internet of Things (IoT) and wireless fidelity (Wireless Fidelity, Wi-Fi for short). The access point supports a wideband channel, and the station supports a narrowband channel, but no limitation is set thereto.

Each station transmits data with the access point through a narrowband channel. Optionally, each station transmits data with the access point through a corresponding narrowband channel. For example, the stations may be grouped, and each group of stations is associated with one or more narrowband channels. The stations in the group transmit data with the access point through an associated narrowband channel.

FIG. 1 is used as an example. The access point transmits data with the first station 11 through a narrowband channel 1 (marked as a CH1), the access point transmits data with the second station 12 through a narrowband channel 2 (marked as a CH2), the access point transmits data with the third station 13 through a narrowband channel 3 (marked as a CH3), and the access point transmits data with the fourth station 14 through a narrowband channel 4 (marked as a CH4).

FIG. 2 is a schematic flowchart of a data transmission method according to an embodiment of this application. As shown in FIG. 2, the method includes the following steps.

S201. When a counter of a first narrowband channel backs off to 0, an access point determines that at least one second station transmits data on a narrowband channel other than the first narrowband channel.

The second station is a station of a plurality of stations other than a first station.

When sending data to the corresponding first station through the first narrowband channel, the access point first contends for the first narrowband channel, and in a contention process, uses the counter to perform back-off, that is, sends data after the counter backs off to 0. Specifically, the counter may use a random number to perform back-off, and this is not limited herein.

In this embodiment, after the counter backs off to 0, the access point determines whether data transmission is performed on another narrowband channel, and determines whether the first narrowband channel is idle.

If data transmission is performed on the another narrowband channel, the access point sends the data to the first station after data transmission performed on the another narrowband channel completes.

S202. The access point sends to-be-transmitted data to a first station through the first narrowband channel when the at least one second station each completes data transmission and the first narrowband channel is idle.

FIG. 1 is used as an example. If the access point wants to send data to the first station, the access point needs to obtain the CH1 through contention; in a contention process, generates a random number and uses the counter to perform back-off after the counter backs off to 0, the access point finds that a second station sends data to the access point on the CH2; and the access point sends the data to the first station after the second station completes transmitting the data that is sent on the CH2.

Certainly, before sending the data to the first station, the access point also determines whether the first narrowband channel is idle, and sends the data when the first narrowband channel is idle.

According to this embodiment, when the counter of the first narrowband channel backs off to 0, the access point determines that the at least one second station transmits the data on the narrowband channel other than the first narrowband channel, and further the access point sends the to-be-transmitted data to the first station through the first narrowband channel when the at least one second station completes data transmission and the access point determines that the first narrowband channel is idle. This implements coordination between a plurality of narrowband channels. To be specific, the plurality of narrowband channels all can be used for data transmission, and a signal on a transmit narrowband channel does not cause interference to a signal on a receive narrowband channel even though the access point performs sending on some channels and performs receiving on some narrowband channels.

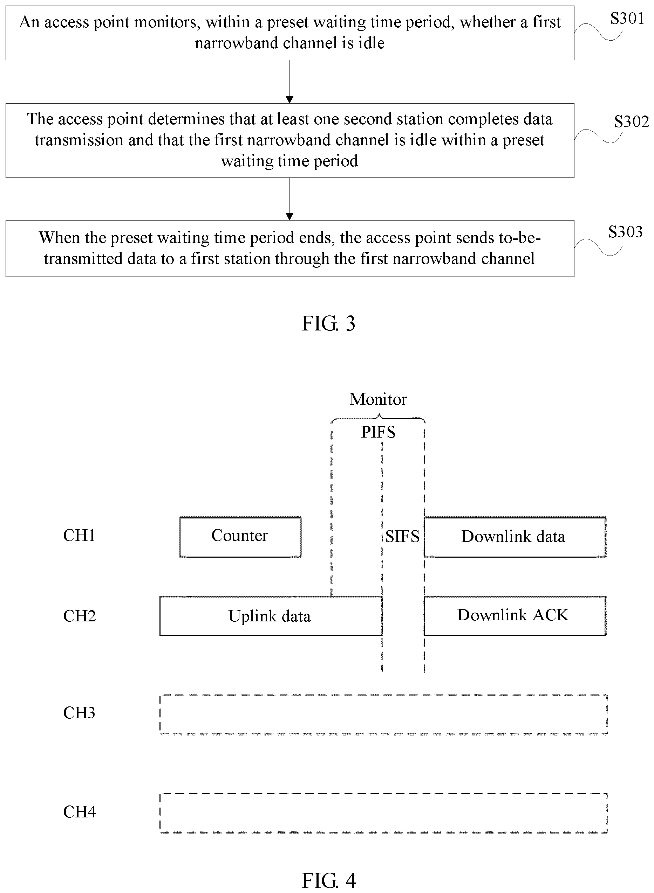

FIG. 3 is a schematic flowchart of another data transmission method according to an embodiment of this application. As shown in FIG. 3, that an access point sends to-be-transmitted data to a first station through a first narrowband channel, when at least one second station completes data transmission and the access point determines that the first narrowband channel is idle may include the following steps.

S301. The access point monitors, within a preset waiting time period, whether the first narrowband channel is idle.

S302. The access point determines that the at least one second station completes data transmission and that the first narrowband channel is idle within a preset waiting time period.

S303. When the preset waiting time period ends, the access point sends the to-be-transmitted data to the first station through the first narrowband channel.

Optionally, after determining that the at least one second station transmits data on a narrowband channel other than the first narrowband channel, the access point waits for a time period until all these second stations complete data transmission and the first narrowband channel is idle, and then sends the to-be-transmitted data. Specifically, the access point monitors, within the preset waiting time period, whether the first narrowband channel is idle.

Specifically, after determining that the at least one second station transmits the data on the narrowband channel other than the first narrowband channel, the access point may parse the data transmitted by the at least one second station, and obtain a data transmission end time point of a second station that is the latest one that ends data transmission in the at least one second station.

After obtaining the data transmitted by the at least one second station, the access point may determine a transmission time of the data based on a data packet header of the data, then determine the second station that is the latest one that ends data transmission in the at least one second station, and further determine the data transmission end time point, to ensure that the at least one second station completes data transmission after the data transmission end time point.

Optionally, after parsing the data transmitted by the at least one second station, and obtaining the data transmission end time point of the second station that is the latest one that ends data transmission in the at least one second station, the access point further determines a length and a start time of the preset waiting time period.

The access point transmits data to the first station at a time point that is a preset time period later than the data transmission end time point. Optionally before performing transmission, the access point determines a preset waiting time period, and monitors, within the preset waiting time period, whether the first narrowband channel is idle.

FIG. 4 is a schematic diagram of a transmission time in the data transmission method according to this embodiment of this application.

Optionally, the access point determines an end time point of the preset waiting time period based on the data transmission end time point and a first preset time period.

As shown in FIG. 4, the first preset time period may be a short interframe space (Short interframe space, SIFS for short), and a time point that is the SIFS later than the data transmission end time point is used as the end time point of the preset waiting time period.

The length of the preset waiting time period is a length of a second preset time period, and the second preset time period may be a point coordination function interframe space (point coordination function (PCF) interframe space, PIFS for short). The access point may determine a start time point of the preset waiting time period based on the length of the second preset time period and the end time point of the preset waiting time period. Specifically, a time point that is the second preset time period earlier than the end time point of the preset waiting time period is the start time point of the preset waiting time period. In this way, the access point may start monitoring, from the start time point of the preset waiting time period, whether the first narrowband channel is idle.

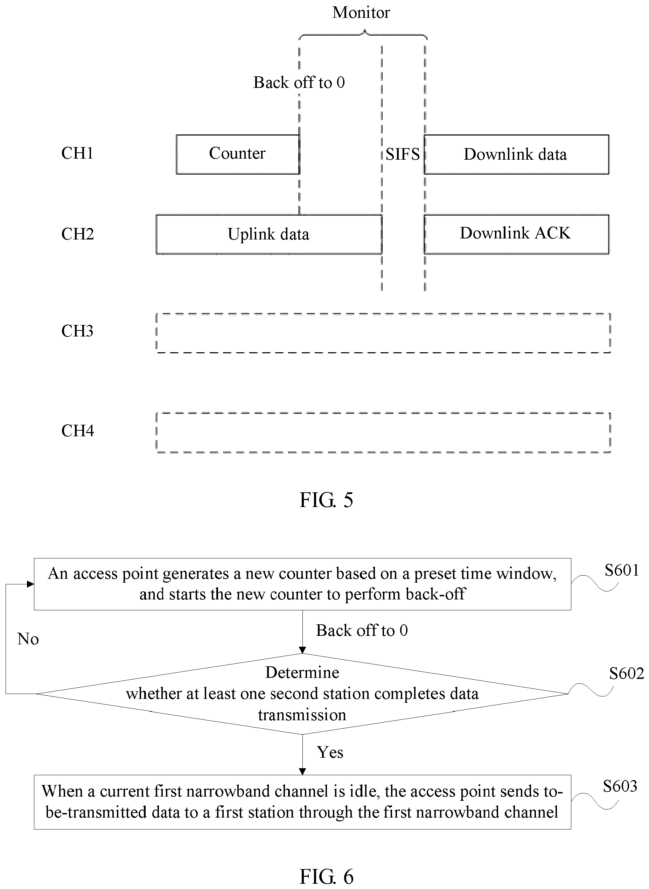

FIG. 5 is a schematic diagram of another transmission time in the data transmission method according to this embodiment of this application.

The access point determines an end time point of the preset waiting time period based on the data transmission end time point and a preset time interval; and uses a time period between a time point at which the counter backs off to 0 and the end time point of the preset waiting time period as the preset waiting time period.

As shown in FIG. 5, in this embodiment, the access point starts monitoring, when the counter backs off to 0, whether the first narrowband channel is idle.

The preset time interval may be an SIFS, and a time point that is the SIFS later than the data transmission end time point is used as the end time point of the preset waiting time period.

The access point starts monitoring when the counter backs off to 0, and determines, within a time period between the time point at which the counter backs off to 0 and the time point that is the SIFS later than the data transmission end time point, whether the first narrowband channel is idle.

FIG. 6 is a schematic flowchart of another data transmission method according to an embodiment of this application. As shown in FIG. 6, that the access point sends to-be-transmitted data to a first station through the first narrowband channel when the at least one second station completes data transmission and the first narrowband channel is idle may specifically include the following steps.

S601. The access point generates a new counter based on a preset time window, and starts the new counter to perform back-off.

To be specific, in this embodiment, after the counter backs off to 0, when the access point finds that data transmission is performed on another narrowband channel, the access point generates the new counter based on the preset time window, that is, generates a random number to start to perform back-off.

The preset time window may be a minimum contention window (Contention window, CW for short), marked as CWmin.

S602. When the new counter backs off to 0, determine whether the at least one second station completes data transmission.

If the at least one second station does not complete data transmission, go back to perform S601, or if the at least one second station completes data transmission, that is, the at least one second station each completes data transmission, perform S603.

S603. When the current first narrowband channel is idle, the access point sends the to-be-transmitted data to the first station through the first narrowband channel.

The CW may be updated according to a preset update mechanism. For example, if the access point successfully contends for the channel this time, the original CW keeps unchanged; or if the access point unsuccessfully contends for the channel, the CW is doubled, and the doubled CW is used as a new CW. This is not limited herein.

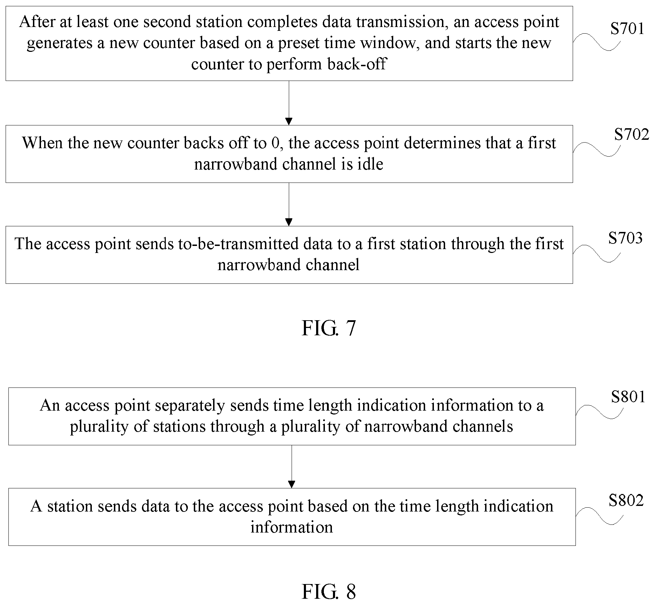

FIG. 7 is a schematic flowchart of another data transmission method according to an embodiment of this application. As shown in FIG. 7, that the access point sends to-be-transmitted data to a first station through the first narrowband channel when the at least one second station completes data transmission and the first narrowband channel is idle may specifically include the following steps.

S701. After the at least one second station completes data transmission, the access point generates a new counter based on a preset time window, and starts the new counter to perform back-off.

The preset time window may be the foregoing CWmin.

In other words, after the at least one second station completes data transmission, the access point waits for a time period.

S702. When the new counter backs off to 0, the access point determines that the first narrowband channel is idle.

S703. The access point sends the to-be-transmitted data to the first station through the first narrowband channel.

To be specific, in this embodiment, after the at least one second station each completes data transmission, the access point generates a random number, and then transmits data after the counter backs off to 0.

FIG. 8 is a schematic flowchart of another data transmission method according to an embodiment of this application. As shown in FIG. 8, the method includes the following steps.

S801. An access point separately sends time length indication information to a plurality of stations through a plurality of narrowband channels.

The time length indication information is used to indicate an end time point of uplink data transmission to a station.

Specifically, the time length indication information indicates that end time points of uplink data transmission of the plurality of stations are the same, that is, uplink transmission is aligned.

S802. A station sends data to the access point based on the time length indication information.

Optionally, that an access point separately sends time length indication information to a plurality of stations through a plurality of narrowband channels may be as follows: The access point separately sends an indication frame to the plurality of stations through the plurality of narrowband channels, where the indication frame includes the time length indication information.

The indication frame may be a trigger frame (Trigger frame, TF for short), and is usually used for uplink scheduling to allocate a resource block and a transmission time to a station. The indication frame may alternatively be an uplink access control (uplink access control, UAC for short) frame, and is usually used for allocating time and frequency information for contention access of a station, so that the station performs uplink sending through contention in an allocated time and at an allocated frequency.

The time length indication information may be carried in indication frames of a same type or indication frames of different types. This is not limited herein.

Optionally, that a station sends data to the access point based on the time length indication information may be as follows: After indication frame transmission ends, and after a preset time period elapses, the station sends the data to the access point based on the time length indication information.

The preset time period may be an SIFS.

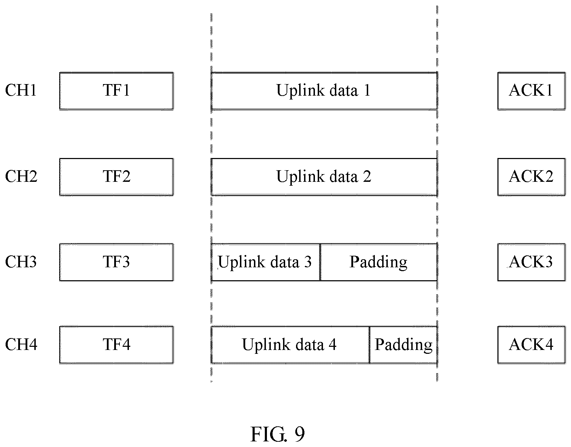

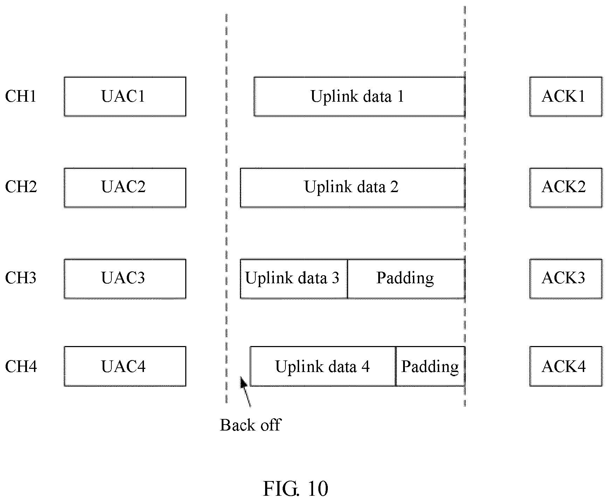

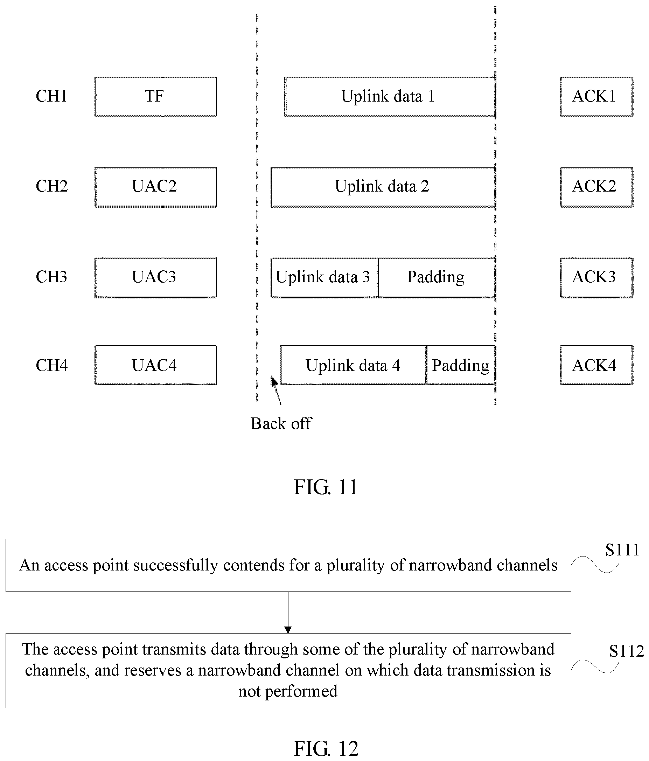

Certainly, specific uplink sending manners may alternatively be different. FIG. 9 is a schematic diagram of another transmission time in the data transmission method according to this embodiment of this application. FIG. 10 is a schematic diagram of another transmission time in the data transmission method according to this embodiment of this application. FIG. 11 is a schematic diagram of another transmission time in the data transmission method according to this embodiment of this application.

As shown in FIG. 9, all time length indication information sent by the access point to the plurality of stations is carried in a TF.

Optionally, after indication frame transmission ends, and after the preset time period elapses, the station starts to send uplink data to the access point.

As shown in FIG. 10, all time length indication information sent by the access point to the plurality of stations is carried in a UAC.

Optionally, after indication frame transmission ends, and after the preset time period elapses, the station generates a counter to start to perform back-off, and sends uplink data to the access point when the counter backs off to 0.

As shown in FIG. 11, a part of time length indication information that is sent by the access point to the plurality of stations is carried in a TF, and the other part thereof is carried in a UAC.

Optionally, after indication frame transmission ends, and after the preset time period elapses, the station generates a counter to start to perform back-off, and sends uplink data to the access point when the counter backs off to 0.

It should be noted that as shown in FIG. 9 to FIG. 11, all end time points of uplink data are the same. If data transmission completes but an end time point of uplink data transmission has not arrived, a padding (padding) field continues to be transmitted until the end time point of uplink data transmission arrives. If a transmission time end point of to-be-transmitted data is later than the end time point of uplink data transmission, the to-be-transmitted data may be divided into at least one segment of data, and a transmission time end point of each segment of data is not later than the end time point of uplink data transmission.

After receiving the uplink data, the access point returns an acknowledgement (Acknowledgement, ACK for short) frame on a narrowband channel on which the data is received.

FIG. 12 is a schematic flowchart of another data transmission method according to an embodiment of this application. As shown in FIG. 12, the method includes the following steps.

S111. An access point successfully contends for a plurality of narrowband channels.

S112. The access point transmits data through some of the plurality of narrowband channels, and reserves a narrowband channel on which data transmission is not performed.

In this embodiment, the access point obtains the plurality of narrowband channels through contention. However, the access point currently only needs to use some of the plurality of narrowband channels to send data to the station, and reserves another narrowband channel on which data transmission is not performed, to prevent another station from contending for these narrowband channels.

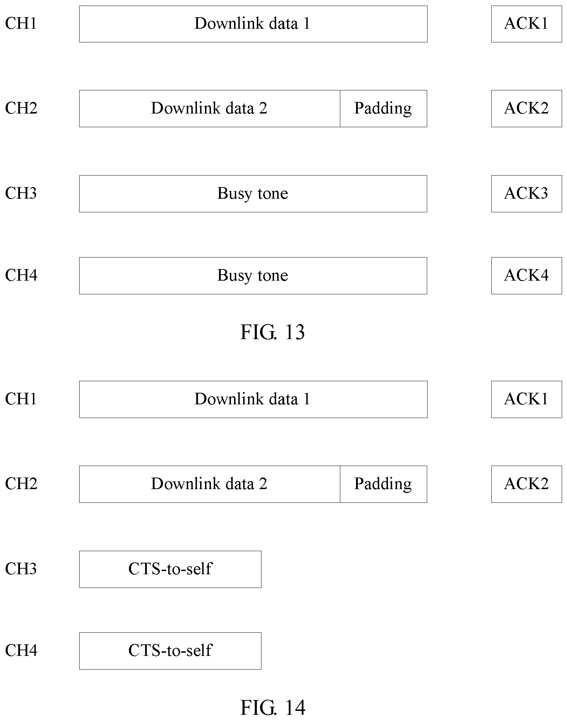

FIG. 13 is a schematic diagram of another transmission time in the data transmission method according to this embodiment of this application.

That the access point reserves a narrowband channel on which data transmission is not performed may include: The access point sends a busy tone (busy tone) on the narrowband channel on which data transmission is not performed.

As shown in FIG. 13, the access point successfully contends for a CH1, a CH2, a CH3, and a CH4; the access point sends data to a first station on the CH1, sends data to a second station on the CH2, and does not need to send data on the CH3 and the CH3. To prevent a third station and a fourth station from contending for the CH3 and the CH4, the access point sends a busy tone on the CH3 and the CH4.

FIG. 14 is a schematic diagram of another transmission time in the data transmission method according to this embodiment of this application.

FIG. 14 is similar to FIG. 13, but a difference between FIG. 14 and FIG. 13 lies in that: That the access point reserves a narrowband channel on which data transmission is not performed may include: The access point sends a clear to send to self (Clear to send to self, CTS-to-self for short) frame on the narrowband channel on which data transmission is not performed.

The CTS-to-self is used to indicate a maximum time length of transmission on narrowband channels on which data is transmitted currently. A station that receives the CTS-to-self sends no data before the maximum transmission length ends.

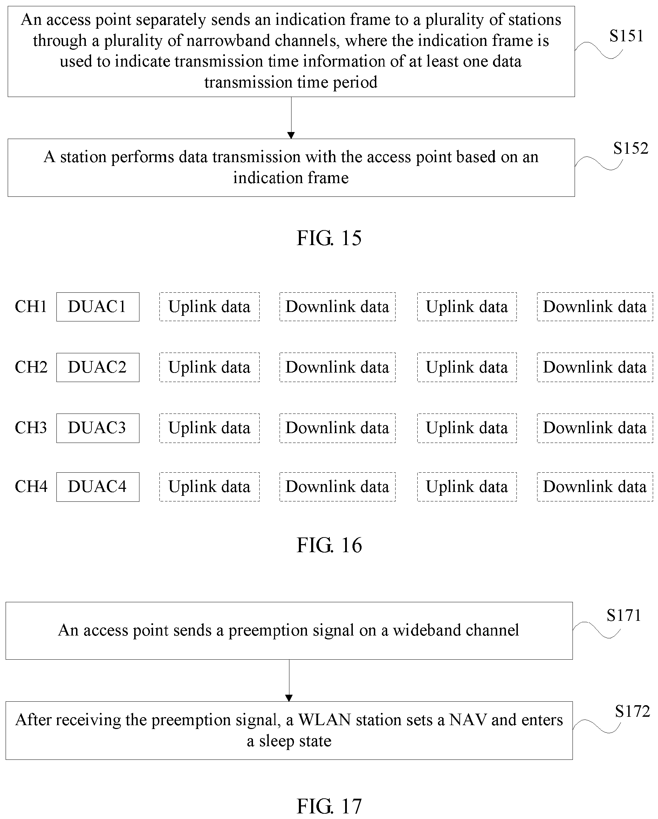

FIG. 15 is a schematic flowchart of another data transmission method according to an embodiment of this application. As shown in FIG. 15, the method includes the following steps.

S151. An access point separately sends an indication frame to a plurality of stations through a plurality of narrowband channels, where the indication frame is used to indicate transmission time information of at least one data transmission time period.

Transmission time information, of the at least one data transmission time period, indicated by indication frames received by all the stations is the same. The at least one data transmission time period includes at least one uplink transmission time period and/or at least one downlink transmission time period.

At least one data transmission time period of each station is aligned with that of each of other stations.

To be specific, within a time period, the access point and the plurality of stations perform downlink transmission, and start time points are the same and end time periods are the same; or within a time period, the access point and the plurality of stations perform uplink transmission, and start time points are the same and end time periods are the same.

S152. A station performs data transmission with the access point based on an indication frame.

Similar to the foregoing embodiment, if transmission of to-be-transmitted data cannot complete within a data transmission time period, the to-be-transmitted data is divided, or if data transmission completes before a data transmission time period ends, a padding field continues to be transmitted until the data transmission time period ends. Details are not described herein.

FIG. 16 is a schematic diagram of another transmission time in the data transmission method according to this embodiment of this application.

Optionally, the indication frame may be a downlink/uplink access control (DUAC) frame.

As shown in FIG. 16, the access point may reserve a time period on each narrowband channel, and within this time period, uses the DUAC frame to indicate at least one data transmission time period, to ensure uplink/downlink transmission alignment between all stations and the access point.

Uplink/downlink transmission indicated in the DUAC frame is not fixed. Specifically, a transmission opportunity (transmission opportunity, TXOP for short) may be obtained first, and uplink/downlink transmission is indicated by using the DUAC frame in the TXOP. The at least one data transmission time period may be indicated depending on an actual service situation. For example, when there is only an uplink service, a downlink transmission time period may be reserved as a feedback acknowledgement time period (for example, an ACK frame). This is not limited herein.

FIG. 17 is a schematic flowchart of another data transmission method according to an embodiment of this application. Same as the foregoing embodiment, an access point sends data to a station through a narrowband channel. In addition, the access point also supports a wideband channel. For the access point, the wideband channel supported by the access point is a sum of narrowband channels on which the access point and the station perform data transmission. Alternatively, the wideband channel supported by the access point may be understood as that a wideband used fordata transmission between the access point and a plurality of stations is divided into a plurality of narrowband channels, which are used for data transmission between the access point and different stations.

In this embodiment, before sending the data to the station, the access point first preempts an entire wideband channel. Generally, the wideband channel has 20 MHz.

As shown in FIG. 17, the method includes the following steps.

S171. The access point sends a preemption signal on a wideband channel.

The preemption signal may be a preamble signal, for example, a legacy preamble (legacy preamble). This is not limited herein.

Specifically, the access point sends the preemption signal on the wideband channel. Both a WLAN station and the Internet of Things that coexist can receive the preemption signal. After receiving the preemption signal, the station learns that the wideband channel has been occupied.

S172. After receiving the preemption signal, a WLAN station sets a network allocation vector (Network Allocation Vector, NAV for short) and enters a sleep state.

This can prevent the WLAN station from preempting a narrowband channel because the WLAN station cannot read a signal of the Internet of Things.

Optionally, the access point may send the preemption signal on the wideband channel each time before sending downlink data to the station, to guard a downlink/uplink interaction time period; or may send the preemption signal on the wideband channel only when the access point sends downlink data to the station for the first time, to guard an entire TXOP. This is not limited herein.

Subsequently, data interaction between the access point and the station may be performed according to the foregoing several embodiments. Details are not described herein again.

In this embodiment, a case in which a plurality of stations simultaneously perform transmission/reception when using a plurality of narrowband channels can be avoided, and a WLAN and the Internet of Things can be also better compatible and coexist.

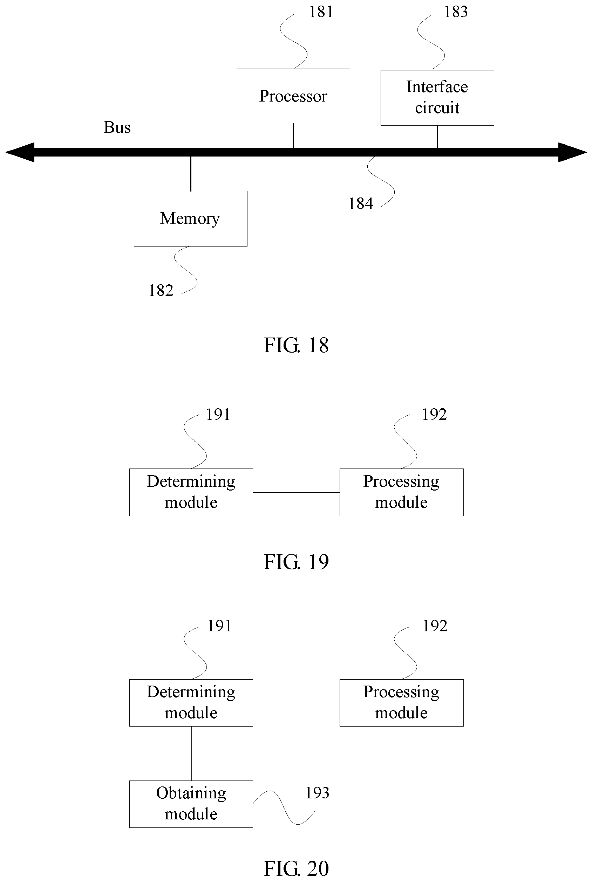

FIG. 18 is a schematic structural diagram of a data transmission apparatus according to this application. As shown in FIG. 18, the apparatus is applied to the foregoing wireless communications system. For details, refer to the descriptions of FIG. 1. Details are not described herein again.

The apparatus includes a processor 181, a memory 182, an interface circuit 183, and a bus 184.

The processor 181, the memory 182, and the interface circuit 183 are connected and implement mutual communication by using the bus 184, and the processor 181 interacts with another apparatus by using the interface circuit 183. The memory 182 stores a group of program code, and the processor 181 invokes the program code stored in the memory, to perform the following operations:
when a counter of a first narrowband channel backs off to 0, determining that at least one second station transmits data on a narrowband channel other than the first narrowband channel, where the second station is a station of a plurality of stations other than a first station; and
sending to-be-transmitted data to the first station through the first narrowband channel when the at least one second station completes data transmission and the first narrowband channel is idle.

Optionally, the processor 181 is specifically configured to: monitor, within the preset waiting time period, whether the first narrowband channel is idle; determine that the at least one second station completes data transmission and that the first narrowband channel is idle within the preset waiting time period; and when the preset waiting time period ends, send the to-be-transmitted data to the first station through the first narrowband channel.

Optionally, the processor 181 is further configured to: after determining that the at least one second station transmits the data on the narrowband channel other than the first narrowband channel, parse the data transmitted by the at least one second station, and obtain a data transmission end time point of a second station that is the latest one that ends data transmission in the at least one second station.

Optionally, the processor 181 is further configured to: after parsing the data transmitted by the at least one second station, and obtaining the data transmission end time point of the second station that is the latest one that ends data transmission in the at least one second station, determine an end time point of the preset waiting time period based on the data transmission end time point and a first preset time period; and determine a start time point of the preset waiting time period based on a second preset time period and the end time point of the preset waiting time period, where a length of the preset waiting time period is a length of the second preset time period.

Optionally, the processor 181 is further configured to: after parsing the data transmitted by the at least one second station, and obtaining the data transmission end time point of the second station that is the latest one that ends data transmission in the at least one second station, determine an end time point of the preset waiting time period based on the data transmission end time point and a preset time interval; and use a time period between a time point at which the counter backs off to 0 and the end time point of the preset waiting time period as the preset waiting time period.

Optionally, the processor 181 is further configured to: generate a new counter based on a preset time window, and start the new counter to perform back-off; when the new counter backs off to 0, determine whether the at least one second station completes data transmission; and when the new counter backs off to 0 and the at least one second station completes data transmission and that the first narrowband channel is idle, send the to-be-transmitted data to the first station through the first narrowband channel.

Optionally, the processor 181 is specifically configured to: after the at least one second station completes data transmission, generate a new counter based on a preset time window, and start the new counter to perform back-off; when the new counter backs off to 0, the access point determines that the first narrowband channel is idle; and send the to-be-transmitted data to the first station through the first narrowband channel.

Optionally, the processor 181 is further configured to: after the at least one second station completes data transmission and the first narrowband channel is not idle, generate a new counter, and start the new counter to perform back-off.

An implementation principle and a technical effect of the apparatus are similar to those of the method embodiments. Details are not described herein again.

For all apparatuses corresponding to the foregoing other embodiments, refer to FIG. 18. Specifically, for an apparatus into which the access point and the station are integrated, refer to FIG. 18. Details are not described herein.

FIG. 19 is a schematic structural diagram of another data transmission apparatus according to this application. The apparatus is applied to the foregoing wireless communications system. For details, refer to the descriptions of FIG. 1. Details are not described herein again. The apparatus may be integrated into the foregoing access point, and the apparatus includes a determining module 191 and a processing module 192.

The determining module 191 is configured to: when a counter of a first narrowband channel backs off to 0, determine that at least one second station transmits data on a narrowband channel other than the first narrowband channel, where a second station is a station of a plurality of stations other than the first station.

The processing module 192 is configured to: when the at least one second station completes data transmission and the first narrowband channel is idle, send to-be-transmitted data to the first station through the first narrowband channel.

An implementation principle and a technical effect of the apparatus are similar to those of the method embodiments. Details are not described herein again.

Optionally, the processing module 192 is specifically configured to: monitor, within the preset waiting time period, whether the first narrowband channel is idle; determine that the at least one second station completes data transmission and that the first narrowband channel is idle within the preset waiting time period; and when the preset waiting time period ends, send the to-be-transmitted data to the first station through the first narrowband channel.

FIG. 20 is a schematic structural diagram of another data transmission apparatus according to this application. As shown in FIG. 20, based on FIG. 19, the apparatus further includes: an obtaining module 193, configured to: parse the data transmitted by the at least one second station, and obtain a data transmission end time point of a second station that is the latest one that ends data transmission in the at least one second station.

Further, the determining module 191 is further configured to: determine an end time point of the preset waiting time period based on the data transmission end time point and a first preset time period; and determine a start time point of the preset waiting time period based on a second preset time period and the end time point of the preset waiting time period, where a length of the preset waiting time period is a length of the second preset time period.

In another implementation, the determining module 191 is further configured to: determine an end time point of the preset waiting time period based on the data transmission end time point and a preset time interval; and use a time period between a time point at which the counter backs off to 0 and the end time point of the preset waiting time period as the preset waiting time period.

Optionally, the processing module 192 is specifically configured to: generate a new counter based on a preset time window, and start the new counter to perform back-off; when the new counter backs off to 0, determine whether the at least one second station completes data transmission; and when the new counter backs off to 0 and the at least one second station completes data transmission and that the first narrowband channel is idle, send the to-be-transmitted data to the first station through the first narrowband channel.

Optionally, the processing module 192 is specifically configured to: after the at least one second station completes data transmission, generate a new counter based on a preset time window, and start the new counter to perform back-off; when the new counter backs off to 0and the first narrowband channel is idle, send the to-be-transmitted data to the first station through the first narrowband channel.

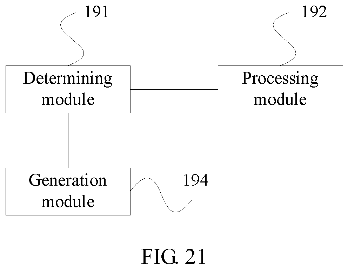

FIG. 21 is a schematic structural diagram of another data transmission apparatus according to this application. As shown in FIG. 21, based on FIG. 19, the apparatus further includes a generation module 194, configured to: after the determining module 191 determines that the at least one second station completes data transmission and that the first narrowband channel is not idle, generate a new counter, and start the new counter to perform back-off.

An implementation principle and a technical effect of the apparatus are similar to those of the method embodiments. Details are not described herein again.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not be performed. In addition, the displayed or discussed mutual couplings or direct couplings or communication connections may be implemented in indirect couplings or communication connections through some interfaces, apparatuses, or units, and may be in electrical, mechanical, or other forms.

The units described as separate parts may or may not be physically separate. Parts displayed as units may or may not be physical units, and may be located in one position or may be distributed on a plurality of network units. Some or all of the units may be selected depending on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) or a processor (English: processor) to perform some of the steps of the methods described in the embodiments of this application. The foregoing storage medium includes any medium that can store program code, such as a USB flash drive, a removable hard disk, a read-only memory (English: Read-Only Memory, ROM for short), a random access memory (English: Random Access Memory, RAM for short), a magnetic disk, or an optical disc.

## Claims

1. A data transmission method, wherein the method is applied to a wireless communications system, the wireless communications system comprises an access point and a plurality of stations, each station transmits data with the access point through a narrowband channel, a first station of the plurality of stations transmits data with the access point through a first narrowband channel, and the method comprises:
when a counter of the first narrowband channel backs off to 0, determining (S201), by the access point, that at least one second station transmits data on a narrowband channel other than the first narrowband channel, wherein the at least one second station is a station of the plurality of stations other than the first station, and wherein after the determining that at least one second station transmits data on a narrowband channel other than the first narrowband channel, the method further comprises:
parsing, by the access point, after obtaining the data transmitted by the at least one second station, the data transmitted by the at least one second station, and obtaining a data transmission end time point of a second station that is the latest one that ends data transmission in the at least one second station from the parsed data; and
sending (S202), by the access point, at a time point that is a preset time period later than the data transmission end time point, to-be-transmitted data to the first station through the first narrowband channel when the at least one second station completes data transmission and the first narrowband channel is idle.

2. The method according to claim 1, wherein the sending, by the access point, to-be-transmitted data to the first station through the first narrowband channel when the at least one second station completes data transmission and the first narrowband channel is idle comprises:
monitoring (S301), by the access point within a preset waiting time period, whether the first narrowband channel is idle;
determining (S302), by the access point, that the at least one second station completes data transmission and that the first narrowband channel is idle within the preset waiting time period; and
when the preset waiting time period ends, sending (S303), by the access point, the to-be-transmitted data to the first station through the first narrowband channel.

3. The method according to claim 2, wherein after the parsing, by the access point, the data transmitted by the at least one second station, and obtaining a data transmission end time point of a second station that is the latest one that ends data transmission in the at least one second station, the method further comprises:
determining, by the access point, an end time point of the preset waiting time period based on the data transmission end time point and a first preset time period; and
determining, by the access point, a start time point of the preset waiting time period based on a second preset time period and the end time point of the preset waiting time period, wherein a length of the preset waiting time period is a length of the second preset time period.

4. The method according to claim 2, wherein after the parsing, by the access point, the data transmitted by the at least one second station, and obtaining a data transmission end time point of a second station that is the latest one that ends data transmission in the at least one second station, the method further comprises:
determining, by the access point, an end time point of the preset waiting time period based on the data transmission end time point and a preset time interval; and
using, by the access point, a time period between a time point at which the counter backs off to 0 and the end time point of the preset waiting time period as the preset waiting time period.

5. The method according to claim 1, wherein the sending, by the access point, to-be-transmitted data to the first station through the first narrowband channel when the at least one second station completes data transmission and the first narrowband channel is idle comprises:
A. generating (S601), by the access point, a new counter based on a preset time window, and starting the new counter to perform back-off;
B. when the new counter backs off to 0, determining (S602) whether the at least one second station completes data transmission; and
C. circularly performing steps A and B until the new counter backs off to 0, and when determining that the at least one second station completes data transmission and that the first narrowband channel is idle, sending (S603), by the access point, the to-be-transmitted data to the first station through the first narrowband channel.

6. The method according to claim 1, wherein the sending, by the access point, to-be-transmitted data to the first station through the first narrowband channel when the at least one second station completes data transmission and the first narrowband channel is idle comprises:
after the at least one second station completes data transmission, generating, by the access point, a new counter based on a preset time window, and starting the new counter to perform back-off,
when the new counter backs off to 0, and the first narrowband channel is idle, sending, by the access point, the to-be-transmitted data to the first station through the first narrowband channel.

7. The method according to claim 1, wherein the method further comprises:
after the at least one second station completes data transmission and the first narrowband channel is not idle, generating, by the access point, a new counter, and starting the new counter to perform back-off.

8. A data transmission apparatus for a wireless communications system, wherein the wireless communications system comprises an access point and a plurality of stations, each station transmits data with the access point through a narrowband channel, a first station of the plurality of stations transmits data with the access point through a first narrowband channel, the apparatus is comprised in the access point, and the apparatus comprises:
a determining module (191), configured to: when a counter of the first narrowband channel backs off to 0, determine that at least one second station transmits data on a narrowband channel other than the first narrowband channel, wherein the at least one second station is a station of the plurality of stations other than the first station;
an obtaining module (193), configured to: parse, after obtaining the data transmitted by the at least one second station, the data transmitted by the at least one second station, and obtain a data transmission end time point of a second station that is the latest one that ends data transmission in the at least one second station from the parsed data; and
a processing module (192), configured to: when the at least one second station completes data transmission and the first narrowband channel is idle, send, at a time point that is a preset time period later than the data transmission end time point, to-be-transmitted data to the first station through the first narrowband channel.

9. The apparatus according to claim 8, wherein the processing module is specifically configured to: monitor, within a preset waiting time period, whether the first narrowband channel is idle; determine that the at least one second station completes data transmission and that the first narrowband channel is idle within the preset waiting time period; and when the preset waiting time period ends, send the to-be-transmitted data to the first station through the first narrowband channel.

10. The apparatus according to claim 9, wherein the determining module is further configured to: determine an end time point of the preset waiting time period based on the data transmission end time point and a first preset time period; and determine a start time point of the preset waiting time period based on a second preset time period and the end time point of the preset waiting time period, wherein a length of the preset waiting time period is a length of the second preset time period.

11. The apparatus according to claim 9, wherein the determining module is further configured to: determine an end time point of the preset waiting time period based on the data transmission end time point and a preset time interval; and use a time period between a time point at which the counter backs off to 0 and the end time point of the preset waiting time period as the preset waiting time period.

12. The apparatus according to claim 8, wherein the processing module is specifically configured to: generate a new counter based on a preset time window, and start the new counter to perform back-off, when the new counter backs off to 0, determine whether the at least one second station completes data transmission; and when the new counter backs off to 0, and the at least one second station completes data transmission and that the first narrowband channel is idle, send the to-be-transmitted data to the first station through the first narrowband channel.

13. The apparatus according to claim 8, wherein the processing module is specifically configured to: after the at least one second station completes data transmission, generate a new counter based on a preset time window, and start the new counter to perform back-off, when the new counter backs off to 0, and the first narrowband channel is idle, send the to-be-transmitted data to the first station through the first narrowband channel.

## Patentansprüche

1. Datenübertragungsverfahren, wobei das Verfahren auf ein Drahtloskommunikationssystem angewendet wird, das Drahtloskommunikationssystem einen Zugangspunkt und eine Vielzahl von Stationen umfasst, jede Station Daten mit dem Zugangspunkt über einen Schmalbandkanal überträgt, eine erste Station aus der Vielzahl von Stationen Daten mit dem Zugangspunkt über einen ersten Schmalbandkanal überträgt und das Verfahren Folgendes umfasst:
wenn ein Zähler des ersten Schmalbandkanals auf 0 zurückgeht, Bestimmen (S201) durch den Zugangspunkt, dass zumindest eine zweite Station Daten auf einem anderen Schmalbandkanal als dem ersten Schmalbandkanal überträgt, wobei die zumindest eine zweite Station eine andere Station aus der Vielzahl von Stationen als die erste Station ist, und wobei nach dem Bestimmen, dass zumindest eine zweite Station Daten auf einem anderen Schmalbandkanal als dem ersten Schmalbandkanal überträgt, das Verfahren ferner Folgendes umfasst:
Analysieren durch den Zugangspunkt, nach Erhalten der Daten, die durch die zumindest eine zweite Station übertragen werden, der Daten, die durch die zumindest eine zweite Station übertragen werden, und Erhalten eines Datenübertragungsendzeitpunktes einer zweiten Station, welche die letzte ist, die eine Datenübertragung in der zumindest einen zweiten Station beendet, von den analysierten Daten; und
Senden (S202), durch den Zugangspunkt, zu einem Zeitpunkt, der eine voreingestellte Zeitdauer später als der Datenübertragungsendzeitpunkt ist, von zu übertragenden Daten an die erste Station über den ersten Schmalbandkanal, wenn die zumindest eine zweite Station eine Datenübertragung abschließt und der erste Schmalbandkanal frei ist.

2. Verfahren nach Anspruch 1, wobei das Senden durch den Zugangspunkt von zu übertragenden Daten an die erste Station über den ersten Schmalbandkanal, wenn die zumindest eine zweite Station eine Datenübertragung abschließt und der erste Schmalbandkanal frei ist, Folgendes umfasst:
Überwachen (S301) durch den Zugangspunkt innerhalb einer voreingestellten Wartezeitdauer, ob der erste Schmalbandkanal frei ist;
Bestimmen (S302) durch den Zugangspunkt, dass die zumindest eine zweite Station die Datenübertragung abschließt und dass der erste Schmalbandkanal innerhalb der voreingestellten Wartezeitdauer frei ist; und
wenn die voreingestellte Wartezeitdauer endet, Senden (S303) durch den Zugangspunkt der zu übertragenden Daten an die erste Station über den ersten Schmalbandkanal.

3. Verfahren nach Anspruch 2, wobei nach dem Analysieren durch den Zugangspunkt der Daten, die durch die zumindest eine zweite Station übertragen werden, und Erhalten eines Datenübertragungsendzeitpunktes einer zweiten Station, welche die letzte ist, die eine Datenübertragung in der zumindest einen zweiten Station beendet, das Verfahren ferner Folgendes umfasst:
Bestimmen, durch den Zugangspunkt, eines Endzeitpunktes der voreingestellten Wartezeitdauer basierend auf dem Datenübertragungsendzeitpunkt und einer ersten voreingestellten Zeitdauer; und
Bestimmen, durch den Zugangspunkt, eines Startzeitpunktes der voreingestellten Wartezeitdauer basierend auf einer zweiten voreingestellten Zeitdauer und dem Endzeitpunkt der voreingestellten Wartezeitdauer, wobei eine Länge der voreingestellten Wartezeitdauer eine Länge der zweiten voreingestellten Zeitdauer ist.

4. Verfahren nach Anspruch 2, wobei nach dem Analysieren, durch den Zugangspunkt, der Daten, die durch die zumindest eine zweite Station übertragen werden, und Erhalten eines Datenübertragungsendzeitpunktes einer zweiten Station, welche die letzte ist, die eine Datenübertragung in der zumindest einen zweiten Station beendet, das Verfahren ferner Folgendes umfasst: Bestimmen, durch den Zugangspunkt, eines Endzeitpunktes der voreingestellten Wartezeitdauer basierend auf dem Datenübertragungsendzeitpunkt und einem voreingestellten Zeitintervall; und
Verwenden, durch den Zugangspunkt, einer Zeitdauer zwischen einem Zeitpunkt, zu dem der Zähler auf 0 zurückgeht, und dem Endzeitpunkt der voreingestellten Wartezeitdauer als die voreingestellte Wartezeitdauer.

5. Verfahren nach Anspruch 1, wobei das Senden, durch den Zugangspunkt, von zu übertragenden Daten an die erste Station über den ersten Schmalbandkanal, wenn die zumindest eine zweite Station Datenübertragung abschließt und der erste Schmalbandkanal frei ist, Folgendes umfasst:
A. Erzeugen (S601), durch den Zugangspunkt, eines neuen Zählers basierend auf einem voreingestellten Zeitfenster und Starten des neuen Zählers, um Rückgang durchzuführen;
B. wenn der neue Zähler auf 0 zurückgeht, Bestimmen (S602), ob die zumindest eine zweite Station Datenübertragung abschließt; und
C. kreisförmiges Durchführen der Schritte A und B, bis der neue Zähler auf 0 zurückgeht, und wenn bestimmt wird, dass die zumindest eine zweite Station eine Datenübertragung abschließt und dass der erste Schmalbandkanal frei ist, Senden (S603), durch den Zugangspunkt, der zu übertragenden Daten an die erste Station über den ersten Schmalbandkanal.

6. Verfahren nach Anspruch 1, wobei das Senden, durch den Zugangspunkt, von zu übertragenden Daten an die erste Station über den ersten Schmalbandkanal, wenn die zumindest eine zweite Station eine Datenübertragung abschließt und der erste Schmalbandkanal frei ist, Folgendes umfasst:
nachdem die zumindest eine zweite Station eine Datenübertragung abschließt, Erzeugen, durch den Zugangspunkt, eines neuen Zählers basierend auf einem voreingestellten Zeitfenster und Starten des neuen Zählers, um Rückgang durchzuführen;
wenn der neue Zähler auf 0 zurückgeht und der erste Schmalbandkanal frei ist, Senden, durch den Zugangspunkt, der zu übertragenden Daten an die erste Station über den ersten Schmalbandkanal.

7. Verfahren nach Anspruch 1, wobei das Verfahren ferner Folgendes umfasst:
nachdem die zumindest eine zweite Station eine Datenübertragung abschließt und der erste Schmalbandkanal nicht frei ist, Erzeugen, durch den Zugangspunkt, eines neuen Zählers und Starten des neuen Zählers, um Rückgang durchzuführen.

8. Datenübertragungsvorrichtung für ein Drahtloskommunikationssystem, wobei das Drahtloskommunikationssystem einen Zugangspunkt und eine Vielzahl von Stationen umfasst, jede Station Daten mit dem Zugangspunkt über einen Schmalbandkanal überträgt, eine erste Station aus der Vielzahl von Stationen Daten mit dem Zugangspunkt über einen ersten Schmalbandkanal überträgt, die Vorrichtung in dem Zugangspunkt umfasst ist, und die Vorrichtung Folgendes umfasst:
ein Bestimmungsmodul (191), das zu Folgendem konfiguriert ist: wenn ein Zähler des ersten Schmalbandkanals auf 0 zurückgeht, Bestimmen, dass zumindest eine zweite Station Daten auf einem anderen Schmalbandkanal als dem ersten Schmalbandkanal überträgt, wobei die zumindest eine zweite Station eine andere Station aus der Vielzahl von Stationen als die erste Station ist;
ein Erhaltungsmodul (193), das zu Folgendem konfiguriert ist: Analysieren, nach Erhalten der Daten, die durch die zumindest eine zweite Station übertragen werden, der Daten, die durch die zumindest eine zweite Station übertragen werden, und Erhalten eines Datenübertragungsendzeitpunktes einer zweiten Station, welche die letzte ist, die eine Datenübertragung in der zumindest einen zweiten Station beendet, von den analysierten Daten; und
ein Verarbeitungsmodul (192), das zu Folgendem konfiguriert ist: wenn die zumindest eine zweite Station eine Datenübertragung abschließt und der erste Schmalbandkanal frei ist, Senden, zu einem Zeitpunkt, der eine voreingestellte Zeitdauer später als der Datenübertragungsendzeitpunkt ist, von zu übertragenden Daten an die erste Station über den ersten Schmalbandkanal.

9. Vorrichtung nach Anspruch 8, wobei das Verarbeitungsmodul spezifisch zu Folgendem konfiguriert ist: Überwachen, innerhalb einer voreingestellten Wartezeitdauer, ob der erste Schmalbandkanal frei ist; Bestimmen, dass die zumindest eine zweite Station eine Datenübertragung abschließt und dass der erste Schmalbandkanal innerhalb der voreingestellten Wartezeitdauer frei ist; und wenn die voreingestellte Wartezeitdauer endet, Senden der zu übertragenden Daten an die erste Station über den ersten Schmalbandkanal.

10. Vorrichtung nach Anspruch 9, wobei das Bestimmungsmodul ferner zu Folgendem konfiguriert ist: Bestimmen eines Endzeitpunktes der voreingestellten Wartezeitdauer basierend auf dem Datenübertragungsendzeitpunkt und einer ersten voreingestellten Zeitdauer; und Bestimmen eines Startzeitpunktes der voreingestellten Wartezeitdauer basierend auf einer zweiten voreingestellten Zeitdauer und dem Endzeitpunkt der voreingestellten Wartezeitdauer, wobei eine Länge der voreingestellten Wartezeitdauer eine Länge der zweiten voreingestellten Zeitdauer ist.

11. Vorrichtung nach Anspruch 9, wobei das Bestimmungsmodul ferner zu Folgendem konfiguriert ist: Bestimmen eines Endzeitpunktes der voreingestellten Wartezeitdauer basierend auf dem Datenübertragungsendzeitpunkt und einem voreingestellten Zeitintervall; und Verwenden einer Zeitdauer zwischen einem Zeitpunkt, zu dem der Zähler auf 0 zurückgeht, und dem Endzeitpunkt der voreingestellten Wartezeitdauer als die voreingestellte Wartezeitdauer.

12. Vorrichtung nach Anspruch 8, wobei das Verarbeitungsmodul spezifisch zu Folgendem konfiguriert ist: Erzeugen eines neuen Zählers basierend auf einem voreingestellten Zeitfenster und Starten des neuen Zählers, um Rückgang durchzuführen; wenn der neue Zähler auf 0 zurückgeht, Bestimmen, ob die zumindest eine zweite Station eine Datenübertragung abschließt; und wenn der neue Zähler auf 0 zurückgeht und die zumindest eine zweite Station Datenübertragung abschließt und der erste Schmalbandkanal frei ist, Senden der zu übertragenden Daten an die erste Station über den ersten Schmalbandkanal.

13. Vorrichtung nach Anspruch 8, wobei das Verarbeitungsmodul spezifisch zu Folgendem konfiguriert ist: nachdem die zumindest eine zweite Station Datenübertragung abschließt, Erzeugen eines neuen Zählers basierend auf einem voreingestellten Zeitfenster und Starten des neuen Zählers, um Rückgang durchzuführen; wenn der neue Zähler auf 0 zurückgeht und der erste Schmalbandkanal frei ist, Senden der zu übertragenden Daten an die erste Station über den ersten Schmalbandkanal.

## Revendications

1. Procédé de transmission de données, dans lequel le procédé est appliqué à un système de communication sans fil, le système de communication sans fil comprend un point d'accès et une pluralité de stations, chaque station transmet des données avec le point d'accès via un canal à bande étroite, une première station de la pluralité de stations transmet des données avec le point d'accès via un premier canal à bande étroite, et le procédé comprend :
lorsqu'un compteur du premier canal à bande étroite revient à 0, la détermination (S201), par le point d'accès, qu'au moins une seconde station transmet des données sur un canal à bande étroite autre que le premier canal à bande étroite, dans lequel l'au moins une seconde station est une station de la pluralité de stations autre que la première station, et dans lequel après la détermination qu'au moins une seconde station transmet des données sur un canal à bande étroite autre que le premier canal à bande étroite, le procédé comprend en outre :
l'analyse, par le point d'accès, après l'obtention des données transmises par l'au moins une seconde station, des données transmises par l'au moins une seconde station, et l'obtention d'un instant de fin de transmission de données d'une seconde station qui est la dernière qui termine la transmission de données dans l'au moins une seconde station à partir des données analysées ; et
l'envoi (S202), par le point d'accès, à un instant qui est une période de temps prédéfinie postérieure à l'instant de fin de transmission de données, de données à transmettre à la première station via le premier canal à bande étroite lorsque l'au moins une seconde la station achève la transmission de données et le premier canal à bande étroite est inactif.

2. Procédé selon la revendication 1, dans lequel l'envoi, par le point d'accès, de données à transmettre à la première station via le premier canal à bande étroite lorsque l'au moins une seconde station achève la transmission de données et que le premier canal à bande étroite est inactif comprend :
le fait de surveiller (S301), par le point d'accès dans une période de temps d'attente prédéfinie, si le premier canal à bande étroite est inactif ;
le fait de déterminer (S302), par le point d'accès, que l'au moins une seconde station achève la transmission de données et que le premier canal à bande étroite est inactif pendant la période de temps d'attente prédéfinie ; et
lorsque la période de temps d'attente prédéfinie se termine, l'envoi (S303), par le point d'accès, des données à transmettre à la première station via le premier canal à bande étroite.

3. Procédé selon la revendication 2, dans lequel après l'analyse, par le point d'accès, des données transmises par l'au moins une seconde station, et l'obtention d'un instant de fin de transmission de données d'une seconde station qui est la dernière qui termine la transmission de données dans l'au moins une seconde station, le procédé comprend en outre :
la détermination, par le point d'accès, d'un instant de fin de la période de temps d'attente prédéfinie sur la base de l'instant de fin de transmission de données et d'une première période de temps prédéfinie ; et
la détermination, par le point d'accès, d'un instant de début de la période de temps d'attente prédéfinie sur la base d'une seconde période de temps prédéfinie et de l'instant de fin de la période de temps d'attente prédéfinie, dans lequel une longueur de la période de temps d'attente prédéfinie est une longueur de la seconde période de temps prédéfinie.

4. Procédé selon la revendication 2, dans lequel après l'analyse, par le point d'accès, des données transmises par l'au moins une seconde station, et l'obtention d'un instant de fin de transmission de données d'une seconde station qui est la dernière qui termine la transmission de données dans l'au moins une seconde station, le procédé comprend en outre :
la détermination, par le point d'accès, d'un instant de fin de la période de temps d'attente prédéfinie sur la base de l'instant de fin de transmission de données et d'un intervalle de temps prédéfini ; et
l'utilisation, par le point d'accès, d'une période de temps entre un instant auquel le compteur revient à 0 et l'instant de fin de la période de temps d'attente prédéfinie en tant que période de temps d'attente prédéfinie.

5. Procédé selon la revendication 1, dans lequel l'envoi, par le point d'accès, de données à transmettre à la première station via le premier canal à bande étroite lorsque l'au moins une seconde station achève la transmission de données et que le premier canal à bande étroite est inactif comprend :
A. la génération (S601), par le point d'accès, d'un nouveau compteur sur la base d'une fenêtre temporelle prédéfinie, et démarrer le nouveau compteur pour effectuer un recul ;
B. lorsque le nouveau compteur revient à 0, la détermination (S602) si l'au moins une seconde station achève la transmission de données ; et
C. l'exécution circulaire des étapes A et B jusqu'à ce que le nouveau compteur revienne à 0, et lors de la détermination que l'au moins une seconde station achève la transmission de données et que le premier canal à bande étroite est inactif, l'envoi (S603), par le point d'accès, des données à transmettre à la première station via le premier canal à bande étroite.

6. Procédé selon la revendication 1, dans lequel l'envoi, par le point d'accès, de données à transmettre à la première station via le premier canal à bande étroite lorsque l'au moins une seconde station achève la transmission de données et que le premier canal à bande étroite est inactif comprend :
après que l'au moins une seconde station a achevé la transmission de données, la génération, par le point d'accès, d'un nouveau compteur sur la base d'une fenêtre temporelle prédéfinie, et démarrer le nouveau compteur pour effectuer un recul ;
lorsque le nouveau compteur revient à 0, et que le premier canal à bande étroite est inactif, l'envoi, par le point d'accès, des données à transmettre à la première station via le premier canal à bande étroite.

7. Procédé selon la revendication 1, dans lequel le procédé comprend en outre :
après que l'au moins une seconde station a achevé la transmission de données et que le premier canal à bande étroite n'est pas inactif, la génération, par le point d'accès, d'un nouveau compteur, et démarrer le nouveau compteur pour effectuer un recul.

8. Appareil de transmission de données pour un système de communication sans fil, dans lequel le système de communication sans fil comprend un point d'accès et une pluralité de stations, chaque station transmet des données avec le point d'accès via un canal à bande étroite, une première station de la pluralité de stations transmet des données avec le point d'accès via un premier canal à bande étroite, l'appareil est compris dans le point d'accès, et l'appareil comprend :
un module de détermination (191), configuré pour : lorsqu'un compteur du premier canal à bande étroite revient à 0, déterminer qu'au moins une seconde station transmet des données sur un canal à bande étroite autre que le premier canal à bande étroite, dans lequel l'au moins une seconde station est une station de la pluralité de stations autre que la première station ;
un module d'obtention (193), configuré pour : analyser, après l'obtention des données transmises par l'au moins une seconde station, les données transmises par l'au moins une seconde station, et obtenir un instant de fin de transmission de données d'une seconde station qui est la dernière qui termine la transmission de données dans l'au moins une seconde station à partir des données analysées ; et
un module de traitement (192), configuré pour : lorsque l'au moins une seconde station achève la transmission de données et le premier canal à bande étroite est inactif, envoyer, à un instant qui est une période de temps prédéfinie postérieure à l'instant de fin de transmission de données, des données à transmettre à la première station via le premier canal à bande étroite.

9. Appareil selon la revendication 8, dans lequel le module de traitement est spécifiquement configuré pour : surveiller, dans une période de temps d'attente prédéfinie, si le premier canal à bande étroite est inactif ; déterminer que l'au moins une seconde station achève la transmission de données et que le premier canal à bande étroite est inactif pendant la période de temps d'attente prédéfinie ; et lorsque la période de temps d'attente prédéfinie se termine, envoyer les données à transmettre à la première station via le premier canal à bande étroite.

10. Appareil selon la revendication 9, dans lequel le module de détermination est en outre configuré pour : déterminer un instant de fin de la période de temps d'attente prédéfinie sur la base de l'instant de fin de transmission de données et d'une première période de temps prédéfinie ; et déterminer un instant de début de la période de temps d'attente prédéfinie sur la base d'une seconde période de temps prédéfinie et de l'instant de fin de la période de temps d'attente prédéfinie, dans lequel une longueur de la période de temps d'attente prédéfinie est une longueur de la seconde période de temps prédéfinie.

11. Appareil selon la revendication 9, dans lequel le module de détermination est en outre configuré pour : déterminer un instant de fin de la période de temps d'attente prédéfinie sur la base de l'instant de fin de transmission de données et d'un intervalle de temps prédéfini ; et utiliser une période de temps entre un instant auquel le compteur revient à 0 et l'instant de fin de la période de temps d'attente prédéfinie en tant que période de temps d'attente prédéfinie.

12. Appareil selon la revendication 8, dans lequel le module de traitement est spécifiquement configuré pour : générer un nouveau compteur sur la base d'une fenêtre temporelle prédéfinie, et démarrer le nouveau compteur pour effectuer un recul ; lorsque le nouveau compteur revient à 0, déterminer si l'au moins une seconde station achève la transmission de données ; et lorsque le nouveau compteur revient à 0, et que l'au moins une seconde station achève la transmission de données et que le premier canal à bande étroite est inactif, envoyer les données à transmettre à la première station via le premier canal à bande étroite.

13. Appareil selon la revendication 8, dans lequel le module de traitement est spécifiquement configuré pour : après que l'au moins une seconde station achève la transmission de données, générer un nouveau compteur sur la base d'une fenêtre temporelle prédéfinie, et démarrer le nouveau compteur pour effectuer un recul ; lorsque le nouveau compteur revient à 0, et que le premier canal à bande étroite est inactif, envoyer les données à transmettre à la première station via le premier canal à bande étroite.
